(19) Europäisches Patentamt
European Patent Office
Office européen des brevets

(11) **EP 4 645 648 A1**

(12) **EUROPEAN PATENT APPLICATION**
published in accordance with Art. 153(4) EPC

(43) Date of publication:
**05.11.2025 Bulletin 2025/45**

(21) Application number: **24815663.0**

(22) Date of filing: **08.03.2024**

(51) International Patent Classification (IPC):
**H02J 7/34** (2006.01)   **H02M 3/335** (2006.01)

(52) Cooperative Patent Classification (CPC):
**H02J 7/34; H02M 3/335**

(86) International application number:
**PCT/KR2024/003006**

(87) International publication number:
**WO 2024/248283 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.05.2023 KR 20230069500**

(71) Applicant: **Samsung Electronics Co., Ltd.
Suwon-si, Gyeonggi-do 16677 (KR)**

(72) Inventors:
• **KIM, Keonwoo
  Suwon-si, Gyeonggi-do 16677 (KR)**
• **KIM, Moonyoung
  Suwon-si, Gyeonggi-do 16677 (KR)**

(74) Representative: **Appleyard Lees IP LLP
15 Clare Road
Halifax HX1 2HY (GB)**

(54) **POWER DELIVERY DEVICE**

(57) The present invention relates to a power delivery device for delivering power through a universal serial bus (USB). The power delivery device may include a driving circuit configured to output an internal operating voltage (Vcc) by an induced electromotive force due to a current flowing through a primary coil (CL1). The driving circuit includes secondary coils (CL22, CL23) of different winding directions, and may be configured such that a plurality of rectifying circuits are coupled in series.

*FIG.1*

EP 4 645 648 A1

## Description

[Technical Field]

The disclosure relates to a power delivery apparatus that transfers power over a universal serial bus (USB).

[Background Art]

A power delivery (PD) apparatus may utilize a type-C USB to supply power for charging a target device electrically coupled thereto. The PD apparatus may increase its maximum power output based on a USB extension standard to enable fast charging.

The PD apparatus may include a direct current to direct current (DC/DC) converter. The DC/DC converter may step up or step down an input voltage to provide an output voltage. The PD apparatus may provide power for charging various types of target devices. The target devices to which the PD apparatus can provide a charging power may include most electronic devices having secondary batteries therein, such as e.g., portable communication devices (e.g., smartphones), computer devices, portable multimedia devices, portable medical devices, cameras, wearable devices, or home appliances.

The PD apparatus may identify target devices electrically coupled thereto by a type-C USB, and provide different levels of voltages for charging for each of the identified target devices. For example, the PD apparatus may provide a variable voltage in the range of 5 V to 48 V, and may provide a maximum output power of up to 240 watts (W).

In a power delivery apparatus that provides a wide output range of charging supply voltage Vo, the power that a regulator must handle may increase in order to supply a constant internal operating voltage Vcc in consideration of the variable charging supply voltage Vo.

[Disclosure]

[Technical Solution]

According to an embodiment of the disclosure, a power delivery apparatus may comprise a primary-side input rectification circuit configured such that a current flows through a primary coil by alternately operating at least two switching elements according to a magnitude of a charging supply voltage to be obtained, a first driving circuit configured to output the charging supply voltage by an induced electromotive force based on a current flowing through the primary coil and a second driving circuit configured to output an internal operating voltage by the induced electromotive force based on the current flowing through the primary coil wherein the second driving circuit includes secondary coils having different winding directions, and is configured such that a plurality of rectification circuits are coupled in series.

According to an embodiment of the disclosure, a power delivery apparatus by a USB may comprise: a flyback converter configured to use an input voltage to output a charging supply voltage variable within a specified range, and an operating voltage having a constant magnitude, and a flyback converter chip configured to use the operating voltage to drive the flyback converter.

According to an embodiment of the disclosure, the flyback converter may comprise:
a transformer including a primary coil and a plurality of secondary coils, and rectification circuits, each having substantially the same electrical structure electrically connected to each of the plurality of secondary coils.

According to an embodiment of the disclosure, the flyback converters may be configured such that voltages obtained in parallel by the two rectification circuits electrically connected to two secondary coils having the same number of turns and opposite winding directions, among the plurality of secondary coils are added to be output as the operating voltage.

[Description of Drawings]

FIG. 1 is a circuit diagram of a power delivery apparatus according to an embodiment of the disclosure.
FIG. 2A is a diagram illustrating an operation principle when a first switching element Q1 is turned on in a power delivery apparatus according to an embodiment of the disclosure.
FIG. 2B is a diagram illustrating an operation principle when a second switching element Q2 is turned on in a power delivery apparatus according to an embodiment of the disclosure.
FIG. 3A is an example waveform diagram of an operation simulation for obtaining a low charging supply voltage Vo in a power delivery apparatus according to an embodiment of the disclosure.

FIG. 3B is an example waveform diagram of an operation simulation for obtaining a high charging supply voltage Vo in a power delivery apparatus according to an embodiment of the disclosure.

FIGS. 4 to 7 are circuit diagrams of a power delivery apparatus according to various embodiments of the disclosure.

[Mode for Invention]

Hereinafter, embodiments of the disclosure will be described in detail with reference to the drawings so that those skilled in the art to which the disclosure pertains may easily practice the disclosure. However, the disclosure may be implemented in various different forms and is not limited to the embodiments described herein. With regard to description of drawings, the same or similar reference numerals may be used for the same or similar components. Further, in the drawings and related descriptions, descriptions of well-known functions and configurations may be omitted for clarity and brevity.

According to an embodiment of the disclosure, a driving circuit designed to constantly supply an internal operating voltage Vcc in a power delivery apparatus having a wide output voltage range may be provided.

According to an embodiment of the disclosure, a power delivery apparatus that provides a charging supply voltage Vo in a wide output range may stably supply a constant internal operating voltage Vcc regardless of the charging supply voltage Vo while reducing voltage stress of a capacitor.

The technical problems to be addressed in the disclosure are not limited to those mentioned above, and other technical problems not mentioned herein may be understood from the example embodiments of the disclosure by those skilled in the art to which the disclosure pertains.

The effects that may be obtained from the example embodiments of the disclosure may be clearly understood by those skilled in the art to which the example embodiments of the disclosure belong from the following description. In other words, any unintended effects of implementing the example embodiments of the disclosure may also be understood from the example embodiments of the disclosure by those skilled in the art.

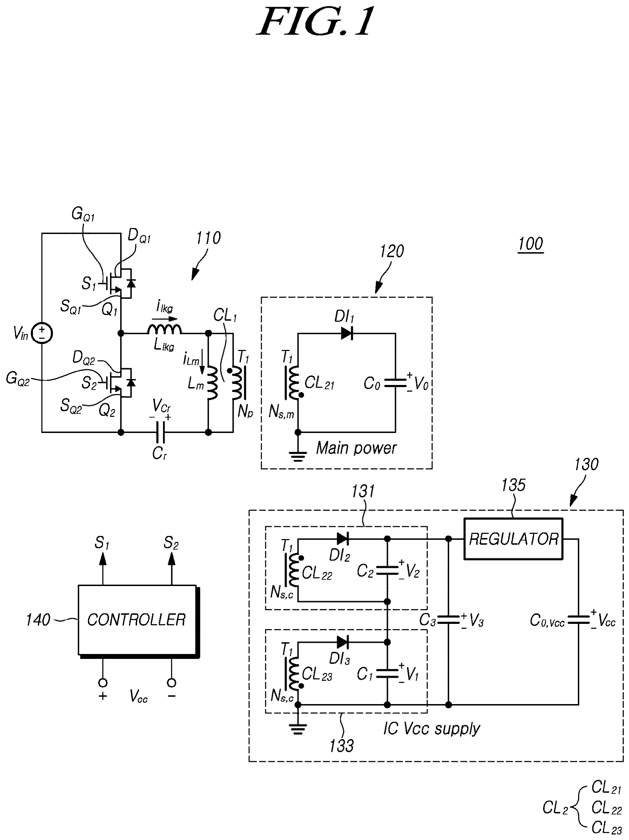

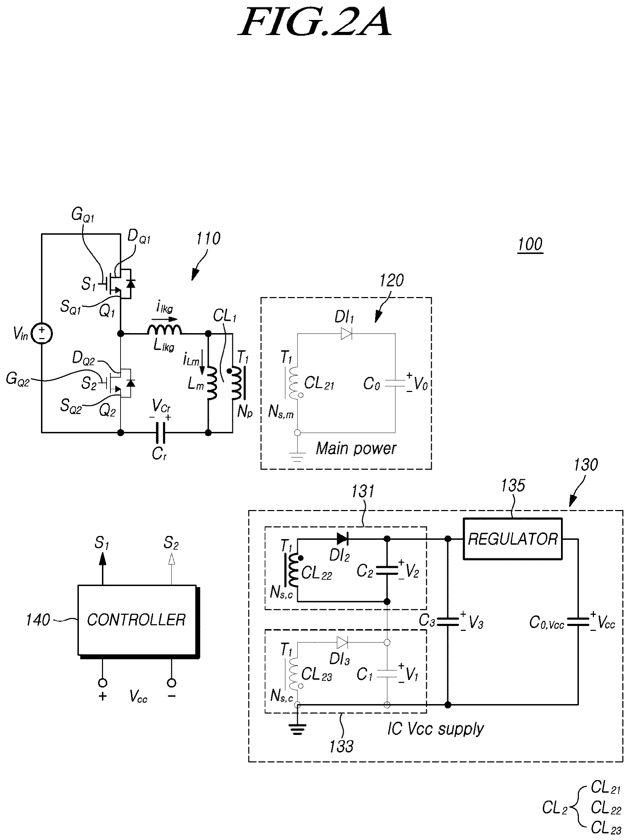

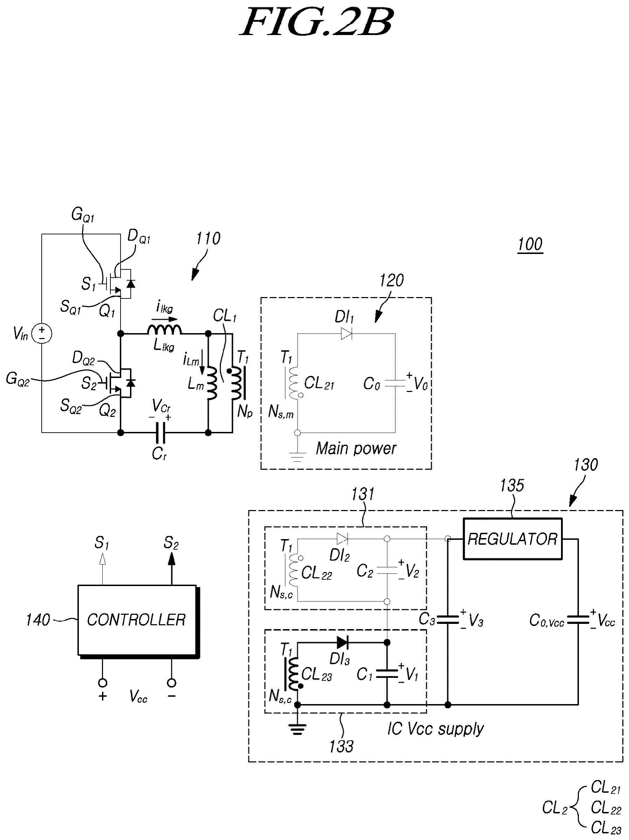

FIG. 1 is a circuit diagram of a power delivery apparatus 100 according to an embodiment of the disclosure, FIG. 2A is a diagram illustrating an operation principle when a first switching element $Q_1$ is turned on in a power delivery apparatus 100 according to an embodiment of the disclosure, and FIG. 2B is a diagram illustrating an operation principle when a second switching element $Q_2$ is turned on in a power delivery apparatus 100 according to an embodiment of the disclosure.

Referring to FIG. 1, FIG. 2A, and/or FIG. 2B, the power delivery apparatus 100 may step up (e.g., boost or increase) or step down (e.g., reduce or decrease) an input voltage $V_{in}$ to supply output voltages Vo or Vcc having one or more magnitude(s). The input voltage $V_{in}$ may be, for example, a DC voltage in which an AC voltage supplied from an external power source (e.g., a home electric outlet of 220 V) is converted by a converter (e.g., an AC/DC converter). The input voltage $V_{in}$ may be, for example, a DC voltage supplied by an internal power source (e.g., a battery). The input voltage $V_{in}$ may have a constant voltage level.

The power delivery apparatus 100 may be a DC/DC converter. The power delivery apparatus 100 may have a structure capable of controlling a wide output voltage range (e.g., 5V to 48V). For example, a flyback converter, a ringing choke converter, a forward converter, a half-bridge converter, a full-bridge converter, a push-pull converter, or the like may be used as the DC/DC converter. As a typical example, the flyback converter may be configured for use in both a voltage boosting or a voltage step-down, and may be applied to both insulation and non-insulation. Further, it is possible to secure a wide input voltage range.

For example, the power delivery apparatus 100 may include a flyback converter. The flyback converter may include an asymmetrical half-bridge (AHB) flyback converter. The AHB flyback converter is capable of low voltage stress and zero-voltage switching.

The power delivery apparatus 100 may include a transformer T1. The transformer $T_1$ may step up or step down a voltage using a mutual induction principle of a coil. The transformer $T_1$ may generate one or more output voltages Vo or Vcc boosted or reduced by a leakage current ($i_{lkg}$) or a magnetization current ($i_{Lm}$) due to an input voltage $V_{in}$.

The transformer $T_1$ may include one primary coil $CL_1$ and a plurality of secondary coils $CL_2$. The number of turns ($N_p$) of the primary coil $CL_1$ (hereinafter, referred to as a "primary side number of turns") may be different from the number of turns ($N_{s,m}$ or $N_{s,c}$) of each of the plurality of secondary coils $CL_2$ (hereinafter, referred to as a "secondary side number of turns"). The number of turns ratio $N_p/N_{s,m}$ or $N_p/N_{s,c}$, which is a ratio of the primary side number of turns $N_p$ to the secondary side number of turns $N_{s,m}$ or $N_{s,c}$, may be an element for determining a magnitude of an output voltage Vo or Vcc. A winding direction of the primary coil $CL_1$ or a winding direction of the secondary coil $CL_2$ may also be a factor for determining the magnitude of the output voltage Vo or Vcc. The winding direction may be indicated by a dot marked at either end of the primary coil $CL_1$ or the secondary coil $CL_2$. As an example, the magnitude of the output voltage Vo or Vcc may be determined by a magnitude of the input voltage $V_{in}$ and/or a number of turns ratio $N_p/N_{s,m}$ or $N_p/N_{s,c}$, which is a ratio of the primary side number of turns $N_p$ to the respective secondary side number of turns $N_{s,m}$ or $N_{s,c}$ of the plurality of secondary coils $CL_{21}$, $CL_{22}$, $CL_{23}$. For example, the magnitude of the output voltage Vo or Vcc may be affected by the winding direction of the primary coil $CL_1$ or the winding direction of the secondary coil $CL_2$. The winding direction of the primary coil $CL_1$ and/or the winding direction of the secondary coil $CL_2$ may determine the direction of the induced electromotive force in the secondary coil $CL_2$ due to the current flowing in a predetermined direction in the primary coil $CL_1$. The direction of the induced electromotive force may determine the direction of the current flowing through the secondary coil $CL_2$. For example, the polarity of the input voltage $V_{in}$ and the output voltage Vo or Vcc may be the same as each other in a subtractive polarity transformer. In this case, the current in the secondary coil $CL_2$ may flow in a direction opposite to the direction of the current flowing through the primary coil $CL_1$. For example, the polarity of the input voltage $V_{in}$ and the output voltage Vo or Vcc may be opposite to each other in an additive polarity transformer. In this case, the current flowing in the secondary coil $CL_2$ may flow in the same direction as that of the primary coil $CL_1$.

The power delivery apparatus 100 may include an input-side rectifier 110, an output-side rectifier, and/or a controller (e.g., including various circuitry) 140. The input-side rectifier 110 may include a primary-side input rectifier circuit. The output-side rectifier may include a first driving circuit 120 and/or a second driving circuit 130.

The input-side rectifier 110 may include an input voltage source, a plurality of switching elements (e.g., a first switching element $Q_1$ or a second switching element $Q_2$), a plurality of diodes, a leakage inductor $L_{lke}$, a magnetization inductor $L_m$, or a resonance capacitor $C_r$. The leakage current $i_{lkg}$ may flow through the leakage inductor $L_{lkg}$. A magnetization current $i_{Lm}$ may flow through the magnetization inductor $L_m$. The resonant capacitor $C_r$ may be charged with a voltage $V_{Cr}$.

Assuming that the resonant capacitor $C_r$ is sufficiently large and the voltage $V_{Cr}$ has a constant magnitude, the voltage $V_{Cr}$ charged in the resonant capacitor $C_r$ may be defined by a current-second balance of the resonant capacitor $C_r$ using the following Equation 1:

$$[\text{Equation 1}]$$

$$\mathbf{V_{Cr} = DV_{in}}$$

wherein 'D' is an operation duty ratio and '$V_{in}$' is a magnitude of the input voltage.

The input-side rectifier 110 may be understood to substantially include a primary coil $CL_1$ of the transformer $T_1$.

The input-side rectifier 110 may alternately switch a plurality of switching elements (e.g., the first switching element $Q_1$ or the second switching element $Q_2$) to change a voltage source (e.g., the input voltage source $V_{in}$ or the voltage $V_{Cr}$ charged to the resonant capacitor $C_r$) that generates a leakage current $i_{lkg}$ or a magnetization current $i_{Lm}$ of the transformer $T_1$. When the voltage source is changed, a path through which the leakage current $i_{lkg}$ or the magnetization current $i_{Lm}$ flows may be changed.

The first switching element $Q_1$ and/or the second switching element $Q_2$ may be connected in series between a positive electrode (+) and a negative electrode (-) of the input voltage source supplying the input voltage $V_{in}$. The first switching element $Q_1$ may be an N-type metal-oxide-semiconductor field-effect transistor (MOS FET). The second switching element $Q_2$ may be an N-type MOS FET. A drain terminal $D_{Q1}$ of the first switching element $Q_1$ may be connected to the positive electrode (+) of the input voltage source. The source terminal $S_{Q1}$ of the first switching element $Q_1$ may be connected to the drain terminal $D_{Q2}$ of the second switching element $Q_2$. The source terminal $S_{Q2}$ of the second switching element $Q_2$ may be connected to the negative electrode of the input voltage source. A gate terminal $G_{Q1}$ of the first switching element $Q_1$ may be electrically connected to the controller 140. A gate terminal $G_{Q2}$ of the second switching element $Q_2$ may be electrically connected to the controller 140. A first switch control signal $S_1$ provided from the controller 140 may be input to the gate terminal $G_{Q1}$ of the first switching element $Q_1$. In this case, the first switching element $Q_1$ may be turned on or turned off in response to the first switch control signal $S_1$ input to the gate terminal $G_{Q1}$. A second switch control signal $S_2$ provided from the controller 140 may be input to the gate terminal $G_{Q2}$ of the second switching element $Q_2$. In this case, the second switching element $Q_2$ may be turned on or turned off in response to the second switch control signal $S_2$ input to the gate terminal $G_{Q2}$. The first switching element $Q_1$ and the second switching element $Q_2$ may be alternately turned on, for example, by the first switch control signal $S_1$ or the second switch control signal $S_2$.

One of the two diodes may be connected in a forward direction in a reverse bias direction (e.g., from the source terminal $S_{Q1}$ to the drain terminal $D_{Q1}$) of the first switching element $Q_1$. The other one of the two diodes may be connected in a forward direction in a reverse bias direction (e.g., from the source terminal $S_{Q2}$ to the drain terminal $D_{Q2}$) of the second switching element $Q_2$.

The leakage inductor $L_{lkg}$ may be configured to connect any point existing between the first switching element $Q_1$ and the second switching element $Q_2$ and one side (e.g., the side marked with a dot) of the primary coil $CL_1$ in series.

The magnetization inductor $L_m$ may be connected in parallel with the primary coil $CL_1$. That is, one side of the magnetization inductor $L_m$ is connected to one side (e.g., the side marked with a dot) of the primary coil $CL_1$, and the other side of the magnetization inductor $L_m$ is connected to the other side (e.g., the side not marked with a dot) of the primary coil $CL_1$.

The resonant capacitor $C_r$ may be connected in series between the source terminal $S_{Q2}$ of the second switching element Q2 and the other side (e.g., the side not marked with a dot) of the primary coil $CL_1$.

The controller 140 may include various control circuitry and control a flow of the leakage current $i_{lkg}$ or the magnetization current $i_{Lm}$ at the input-side rectifier 110. To this end, the controller 140 may output a plurality of switching control signals. The plurality of switching control signals may alternately turn on a plurality of switching elements included in the input-side rectifier 110, for example.

The controller 140 may output a first switching control signal $S_1$ for controlling the operation of the first switching element $Q_1$ included in the input-side rectifier 110. The controller 140 may output a second switching control signal $S_2$ for controlling the operation of the second switching element $Q_2$ included in the input-side rectifier 110. For example, the controller 140 may alternately output the first switching control signal $S_1$ to turn on the first switching element $Q_1$ or the second switching control signal S2 to turn on the second switching element $Q_2$, based on the operation duty ratio D in one switching period. The operation duty ratio D may be, for example, a ratio of a time interval (e.g., a time interval to turn on the first switching element $Q_1$) corresponding to a high-level state with respect to a time interval $T_i$ corresponding to one switching period $T_{sp}$. Hereinafter, the time interval to turn on the first switching element $Q_1$ may be referred to as a "first interval $DT_i$'", and the time interval to turn on the second switching element $Q_2$ will be referred to as a 'second interval (1-D) $T_i$'. Within the time interval $T_i$ corresponding to the one switching period $T_{sp}$, there may not exist an interval in which the first interval $DT_i$ and the second interval $(1-D)T_i$ substantially overlap each other.

The controller 140 may output the first switching control signal $S_1$ for turning on the first switching element $Q_1$ in the first interval $DT_i$ included in one switching period $T_{sp}$. The controller 140 may output the second switching control signal $S_2$ for turning off the second switching element $Q_2$ in the first interval $DT_i$ included in one switching period $T_{sp}$. However, the disclosure is not limited thereto, and it may be implemented by the opposite operation.

The controller 140 may output the first switching control signal S1 for turning off the first switching element $Q_1$ in the second interval $(1-D)T_i$ included in one switching period Ts. The controller 140 may output the second switching control signal $S_2$ for turning on the second switching element $Q_2$ in the second interval $(1-D)T_i$ included in one switching period $T_{sp}$. However, the disclosure is not limited thereto, and it may be implemented by the opposite operation.

The controller 140 may output the first switching control signal $S_1$ for turning on the first switching element $Q_1$ and/or the second switching control signal $S_2$ for turning off the second switching element $Q_2$, in the first interval $DT_i$ included in one switching period $T_{sp}$. The first switching control signal S1 may control the first switching element $Q_1$ such that the first switching element $Q_1$ is turned on. For example, the first switching control signal $S_1$ may be input to the gate terminal $G_{Q1}$ of the first switching element Q1 to turn on (or short-circuit) between the drain terminal $D_{Q1}$ and the source terminal $S_{Q1}$ of the first switching element $Q_1$. The second switching control signal $S_2$ may control the second switching element $Q_2$ such that the second switching element $Q_2$ is turned off. For example, the second switching control signal $S_2$ may be input to the gate terminal $G_{Q2}$ of the second switching element Q2 to turn off (or open-circuit) between the drain terminal $D_{Q2}$ and the source terminal $S_{Q2}$ of the second switching element $Q_2$.

The controller 140 may output the first switching control signal $S_1$ for turning off the first switching element $Q_1$ and/or the second switching control signal $S_2$ for turning on the second switching element $Q_2$, in the second interval $(1-D)T_i$ included in one switching period $T_{sp}$. The first switching control signal $S_1$ may control the first switching element $Q_1$ such that the first switching element $Q_1$ is turned off. For example, the first switching control signal $S_1$ may be input to the gate terminal $G_{Q1}$ of the first switching element $Q_1$ to turn off (or open-circuit) between the drain terminal $D_{Q1}$ and the source terminal $S_{Q1}$ of the first switching element $Q_1$. The second switching control signal $S_2$ may control the second switching element $Q_2$ such that the second switching element $Q_2$ is turned on. For example, the second switching control signal $S_2$ may be input to the gate terminal $G_{Q2}$ of the second switching element Q2 to turn on (or short-circuit) between the drain terminal $D_{Q2}$ and the source terminal $S_{Q2}$ of the second switching element $Q_2$.

The output-side rectifier may generate an internal operating voltage Vcc having a predetermined magnitude and/or a charging supply voltage Vo having a variable magnitude within a predetermined range (e.g., 5 to 48V) by an induced electromotive force in each of a plurality of secondary coils $C_2$ (e.g. $CL_{21}$, $CL_{21}$, $CL_{23}$) making up the transformer $T_1$. The output-side rectifier may include a plurality of driving circuits. For example, the output-side rectifier may include a first driving circuit 120 and a second driving circuit 130 for obtaining an output voltage for each use.

The first driving circuit 120 may output the charging supply voltage Vo having a variable magnitude within a predetermined range (e.g., 5 to 48 V). The magnitude of the charging supply voltage Vo may be affected by the turn ratio $N_p/N_{s,m}$, which is a ratio of the number of turns $N_p$ of the primary coil $CL_1$ to the number of turns $N_{s,m}$ of the secondary coil $CL_{21}$. The charging supply voltage Vo may be used to charge an auxiliary battery including a secondary battery or an electronic device with a built-in secondary battery. The electronic device may include, for example, a portable communication device (e.g., a smartphone), a computer device, a portable multimedia device, a portable medical device, a camera, a wearable device, or a home appliance.

The first driving circuit 120 may include a secondary coil $CL_{21}$, a diode $DI_1$, and/or a capacitor $C_0$. The secondary coil $CL_{21}$ may have a predetermined number of turns $N_{s,m}$. The secondary coil $CL_{21}$ may have a predetermined winding direction. The secondary coil $CL_{21}$ may have a winding direction different from that of the primary coil $CL_1$. The number of

turns $N_{s,m}$ of the secondary coil $CL_{21}$ may be different from the number of turns $N_p$ of the primary coil $CL_1$ included in the input-side rectifier 110. The winding direction of the secondary coil $CL_{21}$ may be different from the winding direction of the primary coil $CL_1$ included in the input-side rectifier 110. This may be seen by the fact that the position of the dot indicated on the primary coil $CL_1$ is different from the position of the dot indicated on the secondary coil $CL_{21}$.

The diode $DI_1$ may be connected to the capacitor $C_0$ in a forward direction from one side (e.g., the side not marked with a dot) of the secondary coil $CL_{21}$. That is, an anode of the diode $DI_1$ may be electrically connected to one side (e.g., the side not marked with a dot) of the secondary coil $CL_{21}$, and a cathode of the diode $DI_1$ may be electrically connected to the capacitor $C_0$. The capacitor $C_0$ may be connected in series between the cathode of the diode $DI_1$ and the other side (e.g., the side marked with a dot) of the secondary coil $CL_{21}$. The charging supply voltage Vo may be stored in the capacitor $C_0$ by a current supplied through the diode $DI_1$. The charging supply voltage Vo stored in the capacitor $C_0$ may be supplied to charge an electronic device electrically connected for charging. The other side (e.g., the side marked with a dot) of the secondary coil $CL_{21}$ may be grounded.

The second driving circuit 130 may output an internal operating voltage Vcc. The internal operating voltage Vcc may be used as an operating voltage required to drive an internal chip (such as the controller 140 (e.g., a flyback converter chip)). Preferably, the internal operating voltage Vcc may be maintained at a constant magnitude without being affected by a change in magnitude of the charging supply voltage Vo.

The second driving circuit 130 may include a first direction driving circuit 131, a second direction driving circuit 133, a regulator (e.g., including various circuitry) 135, and/or a plurality of capacitors ($C_3$, $C_0$, $v_{cc}$). The secondary coils $CL_{22}$ and $CL_{23}$ of the first direction driving circuit 131 and the second direction driving circuit 133 included in the second driving circuit 130 may have different winding directions. Each of the first direction driving circuit 131 and the second direction driving circuit 133 may be a rectification circuit of a single-ended structure. The first direction driving circuit 131 and the second direction driving circuit 133 may be stacked in series to make up the second driving circuit 130.

The first direction driving circuit 131 may include a secondary coil $CL_{22}$, a diode $DI_2$, or a capacitor $C_2$. The secondary coil $CL_{22}$ may have a predetermined number of turns $N_{s,c}$. The secondary coil $CL_{22}$ may have a predetermined winding direction. The secondary coil $CL_{22}$ may have the same winding direction as the primary coil $CL_1$.

The diode $DI_2$ may be connected to the capacitor $C_2$ in a forward direction from one side (e.g., the side marked with a dot) of the secondary coil $CL_{22}$. That is, an anode of the diode $DI_2$ may be electrically connected to one side (e.g., the side marked with a dot) of the secondary coil $CL_{22}$, and a cathode of the diode $DI_2$ may be electrically connected to the capacitor $C_2$. The capacitor $C_2$ may be connected in series between the cathode of the diode $DI_2$ and the other side (e.g., the side not marked with a dot) of the secondary coil $CL_{22}$. A second operating voltage $V_2$ may be stored in the capacitor $C_2$ by a current supplied through the diode $DI_2$ due to an induced electromotive force in the secondary coil $CL_{22}$. The second operating voltage $V_2$ stored in the capacitor $C_2$ may be used as an internal operating voltage Vcc for driving an internal chip (such as the controller 140 (e.g., a flyback converter chip)).

The second operating voltage $V_2$ may be defined by the following Equation 2:

$$[\text{Equation 2}]$$
$$V_2 = \frac{L_m}{L_m + L_{lkg}}(1 - D)\frac{N_{s,c}V_{in}}{N_p}$$

wherein $L_m$ is a magnetization inductance, $L_{lkg}$ is a leakage inductance, D is an operation duty ratio, $N_{s,c}$ is the number of turns of the secondary coil $CL_{22}$ of the first direction driving circuit 131, $V_{in}$ is a magnitude of the input voltage, and $N_p$ is the number of turns of the primary coil $CL_1$.

The second direction driving circuit 133 may include a secondary coil $CL_{23}$, a diode $DI_3$, or a capacitor $C_1$. The secondary coil $CL_{23}$ may have a predetermined number of turns $N_{s,c}$. The secondary coil $CL_{23}$ may have a predetermined winding direction. The secondary coil $CL_{23}$ may have a winding direction different from that of the primary coil $CL_1$. That is, the secondary coil $CL_{23}$ may have the same winding direction as the secondary coil $CL_{21}$.

The diode $DI_3$ may be connected to the capacitor $C_1$ in a forward direction from one side (e.g., the side not marked with a dot) of the secondary coil $CL_{23}$. That is, an anode of the diode $DI_3$ may be electrically connected to one side (e.g., the side not marked with a dot) of the secondary coil $CL_{23}$, and a cathode of the diode $DI_3$ may be electrically connected to the capacitor $C_1$. The capacitor $C_1$ may be connected in series between the cathode of the diode $DI_3$ and the other side (e.g., the side marked with a dot) of the secondary coil $CL_{23}$. A first operating voltage $V_1$ may be stored in the capacitor $C_1$ by a current supplied through the diode $DI_3$ due to an induced electromotive force in the secondary coil $CL_{23}$. The first operating voltage $V_1$ stored in the capacitor $C_1$ may be used as an internal operating voltage Vcc for driving an internal chip (such as the controller 140 (e.g., a flyback converter chip)). The other side (e.g., the side marked with a dot) of the secondary coil $CL_{23}$ may be grounded.

The first operating voltage $V_1$ may be defined by the following Equation 3:

[Equation 3]

$$V_1 = \frac{L_m}{L_m + L_{lkg}} D \frac{N_{s,c} V_{in}}{N_p}$$

wherein $L_m$ is a magnetization inductance, $L_{lkg}$ is a leakage inductance, D is an operation duty ratio, $N_{s,c}$ is the number of turns of the secondary coil $CL_{23}$ of the second direction driving circuit 133, $V_{in}$ is a magnitude of the input voltage, and $N_p$ is the number of turns of the primary coil $CL_1$.

The capacitor $C_3$, which is one of the plurality of capacitors ($C_3$, C0,$v_{cc}$), may be connected between the first direction driving circuit 131 and the second direction driving circuit 133. The capacitor $C_3$ may be charged with a voltage $V_3$ obtained by adding the second operating voltage $V_2$ stored in the capacitor $C_2$ included in the first direction driving circuit 131 and the first operating voltage $V_1$ stored in the capacitor $C_1$ included in the second direction driving circuit 133.

The voltage $V_3$ charged in the capacitor $C_3$ may be then defined by the following Equation 4:

[Equation 4]

$$V_3 = \frac{L_m}{L_m + L_{lkg}} \frac{N_{s,c} V_{in}}{N_p} = \frac{N_p V_{in}}{N_{s,c}}$$

wherein $L_m$ is a magnetization inductance, $L_{lkg}$ is a leakage inductance, $N_{s,c}$ is the number of turns of the secondary coils ($CL_{22}$, $CL_{23}$) of the first or second direction driving circuits 131 and 133, $V_{in}$ is a magnitude of the input voltage, and $N_p$ is the number of turns of the primary coil $CL_1$.

According to the Equation 4 above, the voltage $V_3$ stored in the capacitor $C_3$ to be used as an internal operating voltage Vcc may be obtained regardless of the charging supply voltage Vo of which magnitude may vary depending on the situation. That is, since the voltage $V_3$ stored in the capacitor $C_3$ may be controlled to a constant value in proportion to the input voltage $V_{in}$, a constant internal operating voltage Vcc may be supplied.

The regulator 135 may receive the voltage $V_3$ charged in the capacitor $C_3$ to stably output a constant magnitude of internal operating voltage Vcc. The regulator 135 may be a linear regulator. The regulator 135 may be a switching regulator. The capacitor $C_3$ may be stably charged with a constant magnitude of voltage $V_3$ regardless of variation of the charging supply voltage Vo, and therefore, the regulator 135 may achieve power consumption in its manageable range of regulation.

The capacitor $C_{0,Vcc}$, which is one of the plurality of capacitors ($C_3$, $C_{0,Vcc}$), may store a voltage stably supplied at a certain level through the regulator 135. The voltage stored by the capacitor $C_{0,Vcc}$ may be supplied to the operating voltage Vcc of the controller 140.

The number of turns $N_{s,c}$ of the secondary coil $CL_{22}$ included in the first direction driving circuit 131 may be different from the number of turns $N_p$ of the primary coil $CL_1$ included in the input-side rectifier 110. The number of turns $N_{s,c}$ of the secondary coil $CL_{23}$ included in the second direction driving circuit 133 may be different from the number of turns $N_p$ of the primary coil $CL_1$ included in the input-side rectifier 110. The number of turns $N_{s,c}$ of the secondary coil $CL_{22}$ included in the first direction driving circuit 131 may be different from the number of turns $N_{s,m}$ of the secondary coil $CL_{21}$ included in the first driving circuit 120. The number of turns $N_{s,c}$ of the secondary coil $CL_{23}$ included in the second direction driving circuit 133 may be different from the number of turns $N_{s,m}$ of the secondary coil $CL_{21}$ included in the first driving circuit 120. The number of turns $N_{s,c}$ of the secondary coil $CL_{22}$ included in the first direction driving circuit 131 may be the same as the number of turns $N_{s,c}$ of the secondary coil $CL_{23}$ included in the second direction driving circuit 133.

The winding direction of the secondary coil $CL_{22}$ included in the first direction driving circuit 131 may be the same as the winding direction of the primary coil $CL_1$ included in the input-side rectifier 110. The winding direction of the secondary coil $CL_{23}$ included in the second direction driving circuit 133 may be different from the winding direction of the primary coil $CL_1$ included in the input-side rectifier 110. The winding direction of the secondary coil $CL_{22}$ included in the first direction driving circuit 131 may be different from the winding direction of the secondary coil $CL_{21}$ included in the first driving circuit 120. The winding direction of the secondary coil $CL_{23}$ included in the second direction driving circuit 133 may be the same as the winding direction of the secondary coil $CL_{21}$ included in the first driving circuit 120. The winding direction of the secondary coil $CL_{22}$ included in the first direction driving circuit 131 may be different from the winding direction of the secondary coil $CL_{23}$ included in the second direction driving circuit 133. It may be seen by the fact that a position of a dot indicated on the secondary coil $CL_{22}$ included in the first direction driving circuit 131 is different from a position of a dot indicated on the secondary coil $CL_{23}$ included in the second direction driving circuit 133.

The first direction driving circuit 131 or the second direction driving circuit 133 may alternately output the first or second operating voltage $V_1$ or $V_2$ in response to a switching operation of the first switching element $Q_1$ or the second

switching element $Q_2$ included in the input-side rectifier 110. For example, in a time interval $DT_i$ in which the first switching element $Q_1$ is turned on and the second switching element $Q_2$ is turned off (wherein 'D' is an operation duty ratio and '$T_{sp}$' is a switching period), the first direction driving circuit 131 may output the second operation voltage $V_2$ (see FIG. 2A). In this case, the second direction driving circuit 133 may not substantially output the first operating voltage $V_1$. For example, in a time interval $(1-D)T_i$ where the first switching element $Q_1$ is turned off and the second switching element $Q_2$ is turned on, the second direction driving circuit 133 may output the first operating voltage $V_1$ (see FIG. 2B). In this case, the first direction driving circuit 131 may not substantially output the second operating voltage $V_2$.

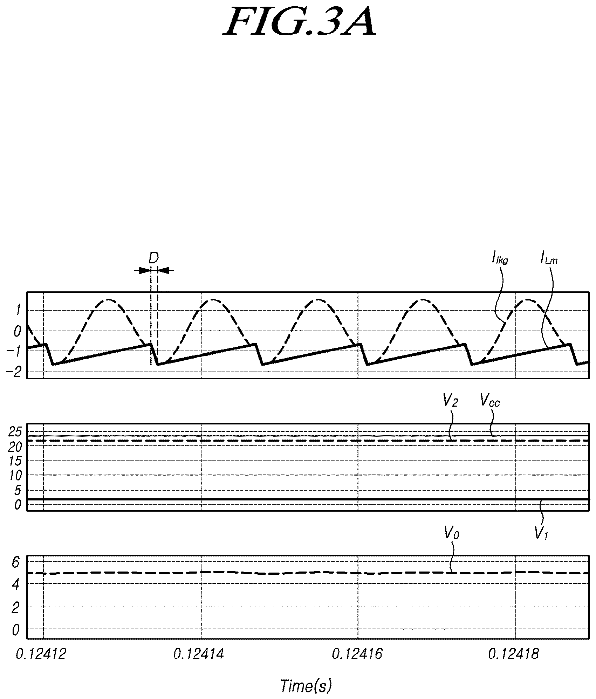

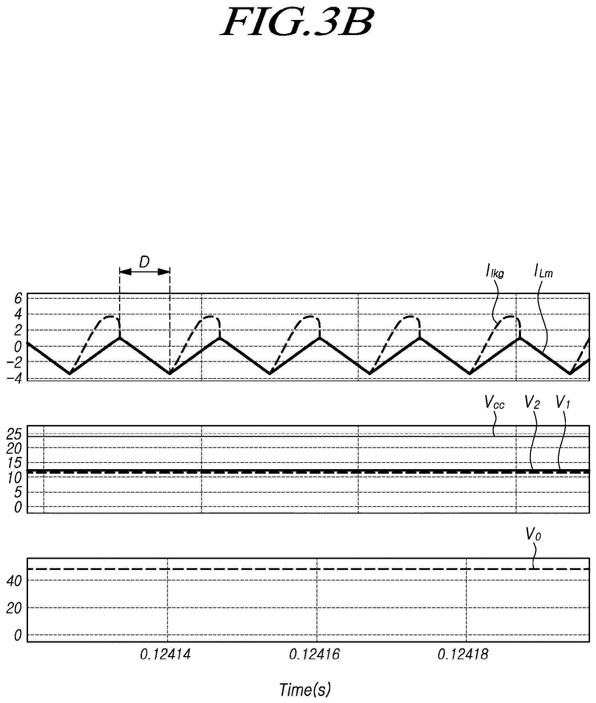

FIG. 3A is an example waveform diagram of an operation simulation for obtaining a low charging supply voltage Vo in a power delivery apparatus (e.g., the power delivery apparatus 100 of FIG. 1), according to an embodiment of the disclosure, and FIG. 3B is an example waveform diagram of an operation simulation for obtaining a high charging supply voltage Vo in a power delivery apparatus 100, according to an embodiment of the disclosure.

Referring to FIG. 3A or FIG. 3B, the power delivery apparatus 100 may determine the operation duty ratio D in consideration of a charging supply voltage Vo to be obtained within a predetermined range (e.g., 5V to 48V). For example, the power delivery apparatus 100 may determine the operation duty ratio D in proportion to the charging supply voltage Vo to be obtained. For example, the operation duty ratio D determined to obtain the charging supply voltage Vo of 5 V may be relatively lower than the operation duty ratio D determined to obtain the charging supply voltage Vo of 48 V. The operation duty ratio D, which may be varied in consideration of the charging supply voltage Vo to be obtained, is to allow a substantially constant internal operating voltage Vcc to be outputted regardless of a change in the charging supply voltage Vo. The operation duty ratio D may control the magnitudes of the first operation voltage $V_1$ and the second operation voltage $V_2$ to determine the internal operation voltage Vcc.

When the charging supply voltage Vo to be obtained is relatively low, such as e.g., 5V, the power delivery apparatus 100 may apply a shorter operation duty ratio D. As described above, as the operation duty ratio D decreases, the first operation voltage $V_1$ (e.g., the voltage charged to the capacitor $C_1$ included in the second direction driving circuit 133 of FIG. 1) decreases, while the second operation voltage $V_2$ (e.g., the voltage charged to the capacitor $C_2$ included in the first direction driving circuit 131 of FIG. 1) increases, and thus a constant internal operating voltage Vcc may be outputted (see FIG. 3A).

When the charging supply voltage Vo to be obtained is relatively high, such as e.g., 48V, the power delivery apparatus 100 may apply a longer operation duty ratio D. As described above, as the operation duty ratio D increases, the first operation voltage $V_1$ (e.g., the voltage charged to the capacitor $C_1$ included in the second direction driving circuit 133 of FIG. 1) may increase, while the second operation voltage $V_2$ (e.g., the voltage charged to the capacitor $C_2$ included in the first direction driving circuit 131 of FIG. 1) may decrease, and thus a constant internal operating voltage Vcc may be outputted (see FIG. 3B).

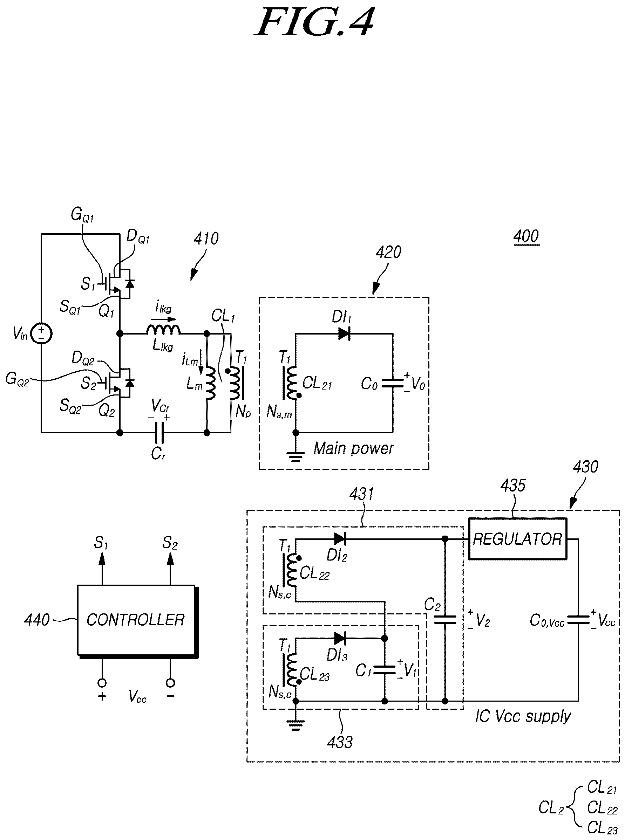

FIG. 4 is a circuit diagram of a power delivery apparatus 400 according to an embodiment of the disclosure.

Referring to FIG. 4, the power delivery apparatus 400 may include an input-side rectifier 410, an output-side rectifier, and/or a controller (e.g., including various circuitry) 440. The output-side rectifier may include a first driving circuit 420 and/or a second driving circuit 430. The input-side rectifier 410 may have substantially the same structure or operation as the input-side rectifier 110 included in the power delivery apparatus 100 illustrated in FIG. 1. The controller 440 may perform substantially the same operation as the controller 140 included in the power transmission apparatus 100 illustrated in FIG. 1. The first driving circuit 420 may have substantially the same structure or operation as the first driving circuit 120 included in the power delivery apparatus 100 illustrated in FIG. 1. However, the second driving circuit 430 may be different in structure or operation from the second driving circuit 130 included in the power delivery apparatus 100 illustrated in FIG. 1. For example, the structure or operation of the first direction driving circuit 431, included in the second driving circuit 430, may be different from that of the first direction driving circuit 131 of FIG. 1. In addition, the second driving circuit 430 does not include the capacitor C3 included in the second driving circuit 130 of the power delivery apparatus 100 illustrated in FIG. 1.

The second driving circuit 430 may include a first direction driving circuit 431, a second direction driving circuit 433, a regulator (e.g., including various circuitry)_435, and/or capacitor $C_{0,Vcc}$.

The first direction driving circuit 431 may include a secondary coil $CL_{22}$, a diode $DI_2$, or a capacitor $C_2$. The secondary coil $CL_{22}$ may have a predetermined number of turns $N_{s,c}$. The secondary coil $CL_{22}$ may have a predetermined winding direction. The secondary coil $CL_{22}$ may have the same winding direction as the primary coil $CL_1$.

The diode $DI_2$ may be connected to the capacitor $C_2$ in a forward direction from one side (e.g., the side marked with a dot) of the secondary coil $CL_{22}$. That is, an anode of the diode $DI_2$ may be electrically connected to one side (e.g., the side marked with a dot) of the secondary coil $CL_{22}$, and a cathode of the diode $DI_2$ may be electrically connected to the capacitor $C_2$. The capacitor $C_2$ may be connected in series between a cathode of the diode $DI_2$ and one side (e.g., the side marked with a dot) of the secondary coil $CL_{23}$. A second operating voltage $V_2$ may be stored in the capacitor $C_2$ by a current supplied through the diode $DI_2$ due to an induced electromotive force in the secondary coil $CL_{22}$. The second operating voltage $V_2$ stored in the capacitor $C_2$ may be used as an internal operating voltage Vcc for driving an internal chip (such as the controller 140 (e.g., a flyback converter chip)). The second operating voltage $V_2$ charged in the capacitor $C_2$ may be

defined to be the same as the voltage $V_3$ defined by the Equation 3 above.

The regulator 435 may be supplied with the second operating voltage $V_2$ charged in the capacitor $C_2$ to stably output the internal operating voltage Vcc of a constant magnitude. The regulator 435 may be a linear regulator. The regulator 435 may be a switching regulator. Since the capacitor $C_2$ may be stably charged with the second operating voltage $V_2$ of a constant magnitude regardless of variation of the charging supply voltage Vo, the regulator 435 may achieve power consumption in a manageable range.

The capacitor $C_{0,Vcc}$ may store a voltage stably supplied at a constant magnitude through the regulator 435. The voltage stored by the capacitor $C_{0,Vcc}$ may be supplied to the operating voltage Vcc of the controller 440.

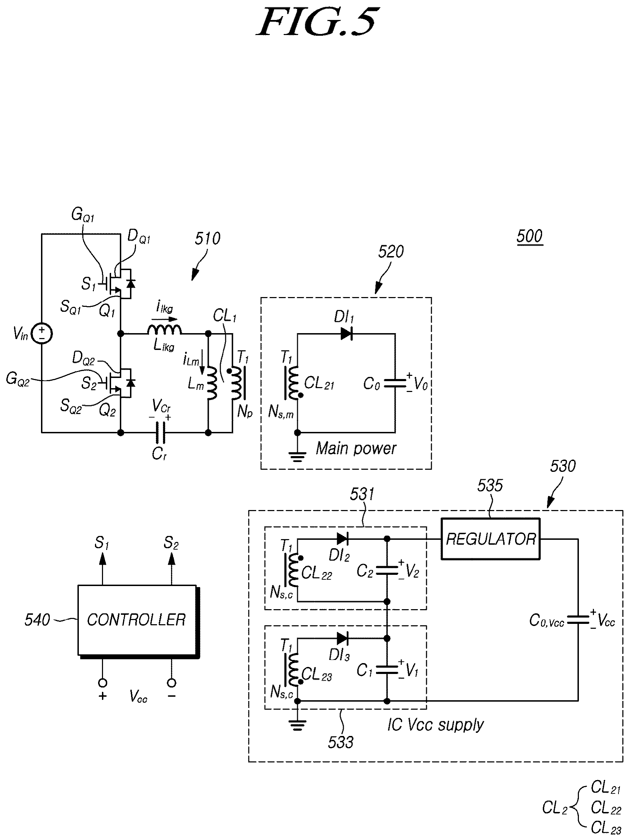

FIG. 5 is a circuit diagram of a power delivery apparatus 500 according to an embodiment of the disclosure.

Referring to FIG. 5, the power delivery apparatus 500 may include an input-side rectifier 510, an output-side rectifier, and/or a controller (e.g., including various circuitry) 540. The output-side rectifier may include a first driving circuit 520 or a second driving circuit 530. The input-side rectifier 510 may have substantially the same structure or operation as the input-side rectifier 110 included in the power delivery apparatus 100 illustrated in FIG. 1. The controller 540 may perform substantially the same operation as the controller 140 included in the power transmission apparatus 100 illustrated in FIG. 1. The first driving circuit 520 may have substantially the same structure or operation as the first driving circuit 120 included in the power delivery apparatus 100 illustrated in FIG. 1. However, the second driving circuit 530 may be different in structure or operation from the second driving circuit 130 included in the power delivery apparatus 100 illustrated in FIG. 1. For example, the second driving circuit 530 does not include the capacitor $C_3$ included in the second driving circuit 130 of the power delivery apparatus 100 illustrated in FIG. 1.

The second driving circuit 530 may include a first direction driving circuit 531, a second direction driving circuit 533, a regulator 535, or a capacitor $C_{0,Vcc}$.

The regulator 535 may be supplied with the second operating voltage $V_2$ charged in the capacitor $C_2$ included in the first direction driving circuit 531 and the first operating voltage $V_1$ charged in the capacitor $C_1$ included in the second direction driving circuit 533 to stably output the internal operating voltage Vcc of a constant magnitude. The regulator 535 may be a linear regulator. The regulator 535 may be a switching regulator. Since the capacitor $C_2$ and the capacitor $C_1$ may be stably charged with the first and second operating voltages ($V_1$, $V_2$) of a constant magnitude irrespectively of variation in the charging supply voltage Vo, the regulator 535 may achieve power consumption in a manageable range.

The capacitor $C_{0,Vcc}$ may store a voltage that is stably supplied at a constant magnitude through the regulator 535. The voltage stored by the capacitor $C_{0,Vcc}$ may be supplied as the operating voltage Vcc of the controller 540.

The following Table 1 illustrates voltage stress for each capacitor in each of the power delivery apparatus 100 shown in FIG. 1, the power delivery apparatus 400 shown in FIG. 4, or the power delivery apparatus 500 shown in FIG. 5.

[Table 1]

|  | **FIG. 1** | **FIG. 4** | **FIG. 5** |
|---|---|---|---|
| $C_1$ | $DV_O{}^*N_{s,c}/N_{s,m}$ | $DV_O{}^*N_{s,c}/N_{s,m}$ | $DV_O{}^*N_{s,c}/N_{s,m}$ |
| $C_2$ | $(1-D)V_O{}^*N_{s,c}/N_{s,m}$ | $V_O{}^*N_{s,c}/N_{s,m}$ | $(1-D) V_O{}^*N_{s,c}/N_{s,m}$ |
| $C_3$ | $V_O{}^*N_{s,c}/N_{s,m}$ | - | - |

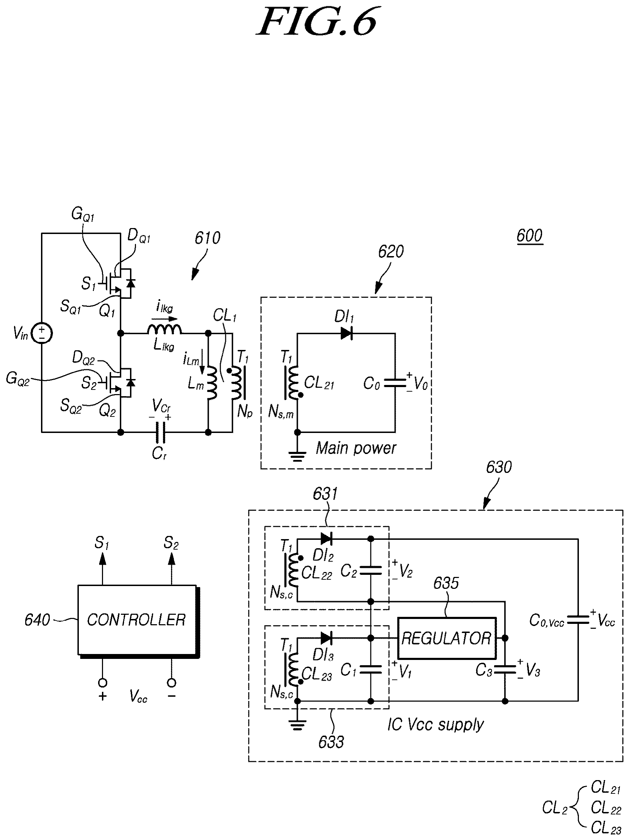

FIG. 6 is a circuit diagram of a power delivery apparatus 600 according to an embodiment of the disclosure.

Referring to FIG. 6, the power delivery apparatus 600 may include an input-side rectifier 610, an output-side rectifier, and/or a controller (e.g., including various circuitry) 640. The output-side rectifier may include a first driving circuit 620 or a second driving circuit 630. The input-side rectifier 610 may have substantially the same structure or operation as the input-side rectifier 110 included in the power delivery apparatus 100 illustrated in FIG. 1. The controller 640 may perform substantially the same operation as the controller 140 included in the power transmission apparatus 100 illustrated in FIG. 1. The first driving circuit 620 may have substantially the same structure or operation as the first driving circuit 120 included in the power delivery apparatus 100 illustrated in FIG. 1. However, the second driving circuit 630 may be different in structure or operation from the second driving circuit 130 included in the power delivery apparatus 100 illustrated in FIG. 1. For example, in the second driving circuit 130 of the power delivery apparatus 100 illustrated in FIG. 1, the regulator 135 is provided at the output terminal of the internal operating voltage Vcc, while in FIG. 6, the regulator 635 is provided at an output terminal of the second direction driving circuit 633 at the output terminal at which the first operating voltage $V_1$ charged in the capacitor $C_1$ included in the second direction driving circuit 633 is output. In this case, the feedback of the regulator 635 may be constantly controlled by receiving the internal driving voltage Vcc, and therefore, the voltage stress of the switch used in the regulator 635 may be reduced.

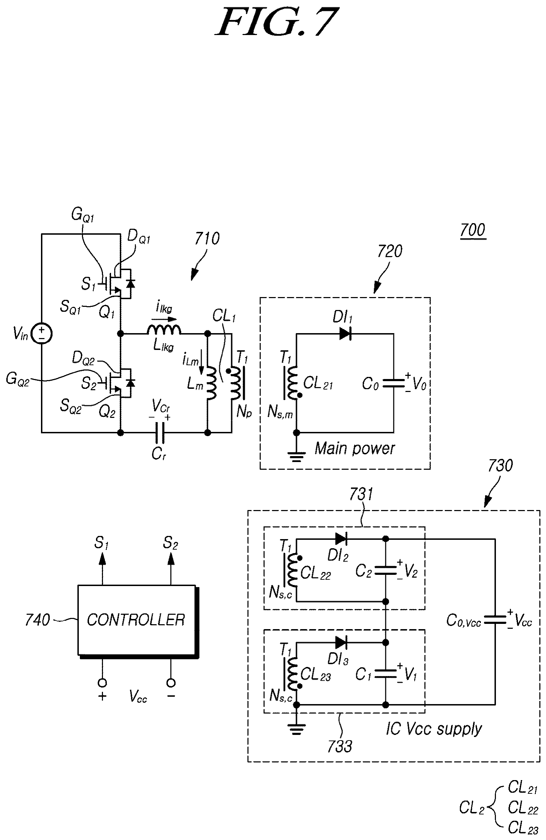

FIG. 7 is a circuit diagram of a power delivery apparatus 700 according to an embodiment of the disclosure.

The power delivery apparatus 700 illustrated in FIG. 7 may include an input-side rectifier 710, an output-side rectifier, and/or a controller (e.g., including various circuitry) 740. The output-side rectifier may include a first driving circuit 720 or a second driving circuit 730. The input-side rectifier 710 may have substantially the same structure or operation as the input-side rectifier 110 included in the power delivery apparatus 100 illustrated in FIG. 1. The controller 740 may perform substantially the same operation as the controller 140 included in the power transmission apparatus 100 illustrated in FIG. 1. The first driving circuit 720 may have substantially the same structure or operation as the first driving circuit 120 included in the power delivery apparatus 100 illustrated in FIG. 1. However, the second driving circuit 730 may be different in structure or operation from the second driving circuit 130 included in the power delivery apparatus 100 illustrated in FIG. 1. For example, the second driving circuit 130 of the power delivery apparatus 100 illustrated in FIG. 1 includes the regulator 135, but the second driving circuit 730 of FIG. 7 does not include a regulator.

If the input voltage $V_{in}$ does not change when the power delivery apparatus 700 illustrated in FIG. 7 does not include the regulator, the power delivery apparatus 700 may constantly output the internal operating voltage Vcc regardless of the charging supply voltage Vo.

Although the direct-current supply device according to various embodiments of the disclosure has been described based on an AHB flyback converter, it may not only be equally applicable to other type of flyback converters (e.g., a resistor-capacitor-diode flyback converter, an active clamp flyback converter, or a two-switch flyback converter) but also may stably supply a constant internal operating voltage Vcc based on similar operations.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled to the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A power delivery (PD) apparatus (100), comprising:

   a primary-side input rectification circuit (110) configured such that a current flows through a primary coil ($C_1$) by alternately operating at least two switching elements ($Q_1$, $Q_2$), comprising at least one switch, according to a magnitude of a charging supply voltage (Vo) to be obtained;
   a first driving circuit (120) configured to output the charging supply voltage (Vo) by an induced electromotive force due to a current flowing through the primary coil ($C_1$); and

a second driving circuit (130) configured to output an internal operating voltage (Vcc) by the induced electromotive force due to the current flowing through the primary coil ($C_1$),

wherein the second driving circuit (130) includes secondary coils ($C_{22}$, $C_{23}$) having different winding directions, and is configured such that a plurality of rectification circuits (131, 133) are coupled in a form stacked in series.

2. The power delivery apparatus (100) of claim 1, wherein the plurality of rectification circuits (131, 133) having a single-ended structure comprise:

a first direction driving circuit (131) including a secondary coil ($CL_{22}$) having a different winding direction from a secondary coil ($CL_{21}$) included in the first driving circuit (120), and

a second direction driving circuit (133) including a secondary coil ($CL_{23}$) having a same winding direction as the secondary coil ($CL_{21}$) included in the first driving circuit (120),

wherein the second driving circuit (130) comprises a third capacitor ($C_3$) configured to be charged with a voltage ($V_3$) corresponding to a sum of a voltage ($V_2$) charged in the first capacitor ($C_2$) included in the first direction driving circuit (131) and a voltage ($V_1$) charged in the second capacitor ($C_1$) included in the second direction driving circuit (133).

3. The power delivery apparatus (100) of claim 2, wherein the second driving circuit (130) comprises a regulator (135), comprising circuitry, configured to output the voltage ($V_3$) charged in the third capacitor ($C_3$) to the internal operating voltage (Vcc) of a constant magnitude.

4. The power delivery apparatus (100) of claim 1, further comprising:
a controller (140), comprising circuitry, configured to receive the internal operating voltage (Vcc) from the second driving circuit (130) and output switching control signals ($S_1$, $S_2$) to alternately operate the at least two switching elements ($Q_1$, $Q_2$) included in the primary-side input rectification circuit (110).

5. The power delivery apparatus (100) of claim 4, wherein the controller (140) is configured to determine an operation duty ratio (D) in proportion to a magnitude of the charging supply voltage (Vo) and output switching control signals ($S_1$, $S_2$) to adjust a turn-on time interval of each of the at least two switching elements ($Q_1$, $Q_2$) based on the determined operation duty ratio (D).

6. The power delivery apparatus (100) of claim 5, wherein the controller (140) is configured to increase the operation duty ratio (D) based on the magnitude of the charging supply voltage (Vo) increasing, and decrease the operation duty ratio (D) based on the magnitude of the charging supply voltage (Vo) decreasing.

7. The power delivery apparatus (100) of claim 1, wherein the secondary coils ($CL_{22}$, $CL_{23}$) have a same number of turns.

8. The power delivery apparatus (100) of claim 1, wherein the plurality of rectification circuits (131, 133) are configured such that diodes ($DI_2$, $DI_3$) and capacitors ($C_1$, $C_2$) connected in a forward direction on a closed loop connecting both sides of the secondary coils ($CL_{22}$, $CL_{23}$) are connected in series.

9. A power delivery (PD) apparatus (100) of a universal serial bus (USB), comprising:

a flyback converter (110, 120, 130) configured to use an input voltage ($V_{in}$) to output a variable charging supply voltage (Vo) within a specified range, and an operating voltage (Vcc) having a constant magnitude; and

a flyback converter chip (140) configured to use the operating voltage (Vcc) to drive the flyback converter (110, 120, 130),

wherein the flyback converter (110, 120, 130) comprises a transformer including a primary coil ($C_1$) and a plurality of secondary coils ($C_{21}$, $C_{22}$, $C_{23}$), and rectification circuits (120, 131, 133) having the same structure electrically connected to each of the plurality of secondary coils ($C_{21}$, $C_{22}$, $C_{23}$); and

wherein the flyback converters (110, 120, 130) are configured such that voltages obtained in parallel by the two rectification circuits (131, 133) electrically connected to two secondary coils ($C_{22}$, $C_{23}$) having the same number of turns and opposite winding directions, among the plurality of secondary coils ($C_{21}$, $C_{22}$, $C_{23}$) are added to be output as the operating voltage (Vcc).

10. The power delivery apparatus (100) of claim 9, wherein the two rectification circuits (131, 133) having a single ended structure comprises:

a second rectification circuit (131) including a secondary coil ($C_{22}$) having a winding direction opposite to a winding direction of a secondary coil ($C_{21}$) to which a first rectification circuit (120) configured to output the charging supply voltage (Vo) among the rectification circuits (120, 131, 133) is electrically connected; and
a third rectification circuit (133) including a secondary coil ($C_{23}$) having a same winding direction as of the winding direction of the secondary coil ($C_{21}$) to which the first rectification circuit (120) is electrically connected.

11. The power delivery apparatus (100) of claim 9, further comprising:

a third capacitor ($C_3$) configured such that a voltage ($V_3$) is charged with voltages obtained in parallel by the two rectification circuits (131, 133); and
a regulator (135) configured to output the voltage ($V_3$) charged in the third capacitor (C3) as the operating voltage (Vcc) having a constant magnitude.

12. The power delivery apparatus (100) of claim 9, wherein the flyback converter chip (140) is configured to output switching control signals ($S_1$, $S_2$) to alternately operate at least two switching elements ($Q_1$, $Q_2$) configured in the flyback converters (110, 120, 130) to supply current to the primary coil ($C_1$), using the input voltage ($V_{in}$).

13. The power delivery apparatus (100) of claim 12, wherein the flyback converter chip (140) is configured to determine an operation duty ratio (D) in proportion to a magnitude of the charging supply voltage Vo and output the switching control signals ($S_1$, $S_2$) to adjust a turn-on time interval of each of the at least two switching elements ($Q_1$, $Q_2$) based on the determined operation duty ratio (D).

14. The power delivery apparatus (100) of claim 13, wherein the flyback converter chip (140) is configured to increase the operation duty ratio (D) based on the magnitude of the charging supply voltage (Vo) increasing and decrease the operation duty ratio (D) based on the magnitude of the charging supply voltage (Vo) decreasing.

15. The power delivery apparatus (100) of claim 9, wherein the secondary coils ($C_{22}$, $C_{23}$) have the same number of turns, wherein the two rectification circuits (131, 133) are configured such that diodes ($DI_2$, $DI_3$) and capacitors ($C_1$, $C_2$) connected in a forward direction on a closed loop connecting both sides of the secondary coils ($CL_{22}$, $CL_{23}$) are connected in series.

# *FIG.1*

# FIG.2A

# *FIG.2B*

# FIG.3A

# *FIG.3B*

Time(s)

# FIG.4

# FIG.5

# FIG.6

# FIG.7

## INTERNATIONAL SEARCH REPORT

| International application No. |
|---|
| **PCT/KR2024/003006** |

### A. CLASSIFICATION OF SUBJECT MATTER

**H02J 7/34**(2006.01)i; **H02M 3/335**(2006.01)i

According to International Patent Classification (IPC) or to both national classification and IPC

### B. FIELDS SEARCHED

Minimum documentation searched (classification system followed by classification symbols)

H02J 7/34(2006.01); H02M 1/44(2007.01); H02M 3/155(2006.01); H02M 3/28(2006.01); H02M 3/315(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 정류 회로(rectifier circuit), 스위치(switch), 코일(coil), 직렬(series), 방향(direction), 플라이백(flyback), 전력 전달(power delivery), 충전(charging)

### C. DOCUMENTS CONSIDERED TO BE RELEVANT

| Category* | Citation of document, with indication, where appropriate, of the relevant passages | Relevant to claim No. |
|---|---|---|
| Y | KR 10-2006-0083162 A (SANKEN ELECTRIC CO., LTD.) 20 July 2006 (2006-07-20)<br>See paragraphs [0003]-[0031]; and figures 1-4. | 1-15 |
| Y | KR 10-0729835 B1 (SEOUL NATIONAL UNIVERSITY OF TECHNOLOGY CENTER FOR INDUSTRY COLLABORATION) 18 June 2007 (2007-06-18)<br>See paragraphs [0039]-[0046]; and figures 4-5. | 1-15 |
| Y | HAN, Jung-Kyu et al. High-Efficiency Asymmetrical Half-Bridge Converter With a New Coupled Inductor Rectifier (CIR). IEEE TRANSACTIONS ON POWER ELECTRONICS. VOL. 34, NO. 12, pp. 11541-11552, 31 December 2019.<br>[Retrieved on 23 April 2024]. Retrieved from <https://ieeexplore.ieee.org/document/8672479>.<br>See pages 11545-11551; and figures 4-7. | 2-3,5-8,11,13-15 |
| A | KR 10-2017-0118221 A (GOOGLE LLC) 24 October 2017 (2017-10-24)<br>See paragraphs [0015]-[0020]; and figure 1. | 1-15 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 June 2024** | **18 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/003006** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 104917387 A (HANGZHOU ZHONGHENG POWER ENERGY CO., LTD.) 16 September 2015 (2015-09-16)<br>    See claims 1-3; and figures 1-4. | 1-15 |

Form PCT/ISA/210 (second sheet) (July 2022)

**INTERNATIONAL SEARCH REPORT**
Information on patent family members

International application No.

**PCT/KR2024/003006**

| Patent document cited in search report | | | Publication date (day/month/year) | Patent family member(s) | | | Publication date (day/month/year) |
|---|---|---|---|---|---|---|---|
| KR | 10-2006-0083162 | A | 20 July 2006 | JP | 2006-197755 | A | 27 July 2006 |
| | | | | JP | 4671019 | B2 | 13 April 2011 |
| | | | | US | 2006-0158908 | A1 | 20 July 2006 |
| | | | | US | 7304867 | B2 | 04 December 2007 |
| KR | 10-0729835 | B1 | 18 June 2007 | KR | 10-2007-0053025 | A | 23 May 2007 |
| KR | 10-2017-0118221 | A | 24 October 2017 | CN | 107408893 | A | 28 November 2017 |
| | | | | CN | 107408893 | B | 19 May 2020 |
| | | | | EP | 3308453 | A1 | 18 April 2018 |
| | | | | EP | 3308453 | A4 | 23 January 2019 |
| | | | | JP | 2018-517382 | A | 28 June 2018 |
| | | | | JP | 6595615 | B2 | 23 October 2019 |
| | | | | US | 2016-0365797 | A1 | 15 December 2016 |
| | | | | US | 9917520 | B2 | 13 March 2018 |
| | | | | WO | 2016-201099 | A1 | 15 December 2016 |
| CN | 104917387 | A | 16 September 2015 | | None | | |

Form PCT/ISA/210 (patent family annex) (July 2022)